Europäisches Patentamt

European Patent Office

Office européen des brevets

(11) Veröffentlichungsnummer: **0 282 960**
**A2**

(12) **EUROPÄISCHE PATENTANMELDUNG**

(21) Anmeldenummer: 88104047.1

(22) Anmeldetag: 15.03.88

(51) Int. Cl.⁴: **G02B 6/44**

(30) Priorität: 20.03.87 DE 3709170

(43) Veröffentlichungstag der Anmeldung:
21.09.88 Patentblatt 88/38

(84) Benannte Vertragsstaaten:
**AT BE DE FR GB NL SE**

(71) Anmelder: **Standard Elektrik Lorenz**
**Aktiengesellschaft**
**Lorenzstrasse 10**
**D-7000 Stuttgart 40(DE)**

㉘ **DE**

(71) Anmelder: **Alcatel N.V.**
**Strawinskylaan 537 (World Trade Center)**
**NL-1077 XX Amsterdam(NL)**

㉘ **BE FR GB NL SE AT**

(72) Erfinder: **Kimmich, Klaus**
**Hohentwielstrasse 14**
**D-7000 Stuttgart 1(DE)**
Erfinder: **Grögl, Ferdinand**
**Dürrenstrasse 42**
**D-7141 Oberstenfeld(DE)**

(74) Vertreter: **Graf, Georg Hugo, Dipl.-Ing. et al**
**Standard Elektrik Lorenz AG Patent- und**
**Lizenzwesen Postfach 30 09 29**
**D-7000 Stuttgart 30(DE)**

(54) **Optisches Kabelelement und optisches Kabel.**

(57) Es sind optische Kabelelemente beschrieben, die aus einer beidseitig mit bandförmigen Folien (2, 3) beklebten Wellfolie (4) bestehen, wobei in den Hohlräumen zwischen der Wellfolie (4) und den bandförmigen Folien (2, 3) Lichtwellenleiter (5) beweglich angeordnet sind. Zwei derartige Kabelelemente sind gegenläufig gewendelt zu einem in sich stabilen Rohr gewickelt, das ein zugfestes Zentralelement enthalten und/oder mit einer Füllmasse gefüllt sein kann.

Es sind ferner optische Kabel beschrieben, deren Kabelseele ein oder mehrere derartige Rohre enthält.

Fig.1

Optisches Kabelelement und optisches Kabel

Die Erfindung bezieht sich auf ein Verkabelungselement gemäß dem Oberbegriff des Anspruchs 1 und auf ein optisches Kabel mit mindestens einem derartigen Verkabelungselement.

Aus der US-PS 4146302 ist ein optisches Kabel bekannt, bei dem innerhalb eines Rohres wendelförmig ein Verkabelungselement angeordnet ist, das zwei bandförmige Folien aufweist, zwischen die mehrere Lichtwellenleiter geklebt sind, um diese von äußeren mechanischen Belastungen fernzuhalten. Trotzdem können die Lichtwellenleiter durch mechanische Spannungen und Mikrokrümmungen beansprucht werden, da sie auf den Folien befestigt sind. Die Verkabelung des Verkabelungselements ist aufwendig, da aus dem Verkabelungselement erst durch ein dieses umgebendes, extrudiertes Schutzrohr oder durch eine mehrschichtige Umhüllung ein in sich stabiles Kabelelement entsteht.

Der Erfindung liegt die Aufgabe zugrunde ein optisches Kabel und ein Verkabelungselement anzugeben, das leicht herstellbar ist.

Die Lösung dieser Aufgabe erfolgt mit den im Anspruch 1 genannten Mitteln. Vorteilhafte Weiterbildungen sind in den Unteransprüchen enthalten.

Das neue Verkabelungselement hat den Vorteil, daß die in ihm mit hoher Packungsdichte enthaltenen Lichtwellenleiter bei Herstellung und Verkabelung des Verkabelungselements nicht mechanisch beansprucht werden, da die Lichtwellenleiter von den Folien mechanisch entkoppelt sind. Ferner läßt sich mit dem Verkabelungselement leicht ein in sich mechanisch stabiles Kabelelement herstellen.

Die Erfindung wird nachstehend anhand von Ausführungsbeispielen erläutert. Es zeigt:

Fig. 1 einen Querschnitt durch ein erstes Verkabelungselement

Fig. 2 einen Querschnitt durch ein zweites Verkabelungselement

Fig. 3 ein Kabel.

Weitere Ausführungen sind in der Beschreibung enthalten.

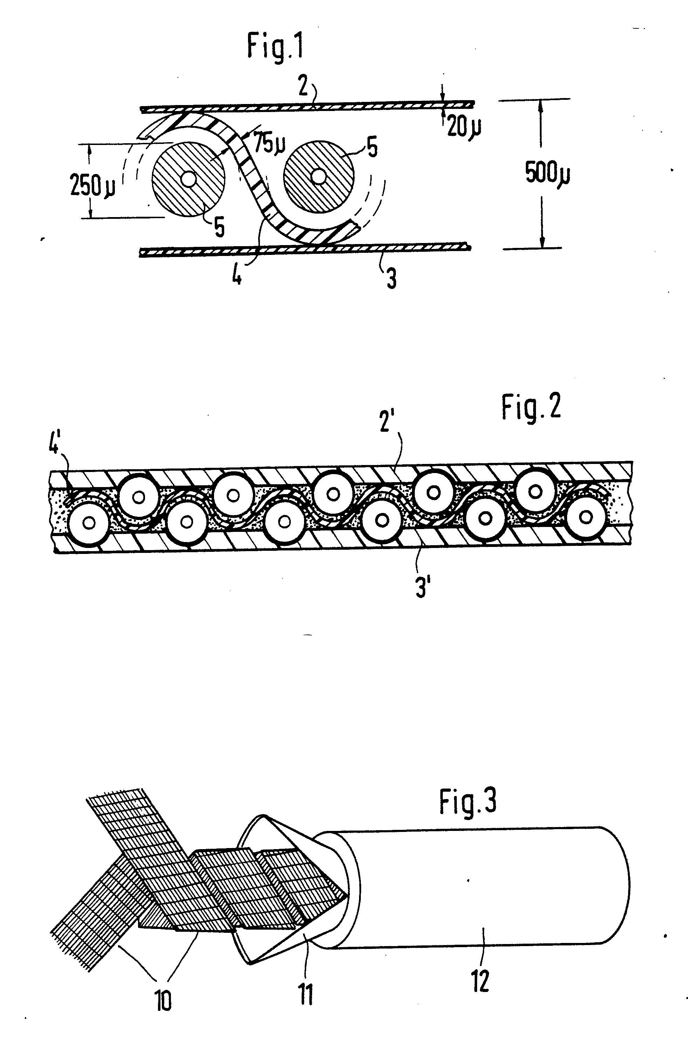

Das erste optische Verkabelungselement gemäß Fig. 1 besteht aus zwei bandförmigen Folien 2, 3, einer Wellfolie 4 und mehreren Lichtwellenleitern 5, von denen nur zwei gezeichnet sind. Die bandförmigen Folien 2, 3 sind beispielsweise 0,02 mm dick und mit der Wellfolie 4 verklebt. Die Wellfolie 4 besteht aus Polyester, oder Polyäthylen oder -butylenterephthalat und ist beispielsweise 0,075 mm dick. In den Hohlräumen zwischen der Wellfolie 4 und den bandförmigen Folien 2, 3 sind die Lichtwellenleiter 5 lose angeordnet. Bei einem Durchmesser der Lichtwellenleiter 5 von 0,25 mm lassen sich in einem optischen Verkabelungselement von ca. 11 mm Breite und 0,5 mm Dicke 16 Lichtwellenleiter 5 unterbringen.

Das zweite optische Verkabelungselement gemäß Fig. 2 unterscheidet sich von dem nach Fig. 1 dadurch, daß eine Wellfolie 4' mit einer flacheren Wellung verwendet ist, so daß die Lichtwellenleiter 5 über die Wellenberge hinausragen. Die bandförmigen Folien 2', 3' sind Schaumlaminatfolien, die die Lichtwellenleiter leicht in die Wellentäler hineindrücken.

Bei anderen Ausführungen sind die Lichtwellenleiter in eine Füllmasse, beispielsweise Silikon eingebettet, sodaß die optischen Verkabelungselemente in sich längswasserdicht sind.

Bei weiteren Ausführungen sind einige Lichtwellenleiter durch zug-und/oder stauchfeste Elemente ersetzt, die mit der Wellfolie 4,4' und/oder den bandförmigen Folien 2,2', 3,3' verklebt sind. Dies geschieht vorzugsweise dadurch, daß der entsprechende Hohlraum mit einem Schmelzkleber gefüllt ist. Als zugfeste Elemente sind Glas-oder Aramidfäden geeignet. Als zug-und stauchfeste Elemente sind Fäden aus glas-oder aramidfaserverstärktem Kunststoff oder einem Liquid-Crystal-Polymer verwendbar.

Bei einem dritten optischen Verkabelungselement sind die Wellentäler einer Wellfolie beidseitig mit einer Einbettungsmasse ausgefüllt, in die Lichtwellenleiter und gegebenenfalls zusätzlich zug-und/oder stauchfeste Elemente eingebettet sind. Die Einbettungsmasse besteht aus einem Material mit sehr niedrigem Elastizitätsmodul und ist an der Oberfläche des Verkabelungselements beispielsweise durch eine Lackschicht versiegelt oder UV-vernetzt.

Fig. 3 zeigt ein optisches Kabel bei dem zwei optische Verkabelungselemente 10 in Hohlrohrbebänderungstechnik zu einem in sich stabilen Rohr gewickelt sind. Das Rohr ist von einem Quellband 11 umgeben. Darüber befindet sich ein zugfester Kabelmantel 12. Das Quellband dient der Längswasserdichtheit und kann gegebenenfalls auch weggelassen sein. Bei anderen Kabelausführungen ist nur ein optisches Verkabelungselemente 10 mit einer weiteren Folie zu einem Rohr gewickelt. Das Wickeln kann überlappend, Stoß auf Stoß oder mit Lücke erfolgen. Das Innere des Rohres kann mit einer Füllmasse gefüllt sein und/oder ein zug-und/oder stauchfestes Zentralelement enthalten.

Bei weiteren Kabelausführungen besteht die Seele aus mehreren aus optischen Verkabelungselementen 10 und gegebenenfalls Folien gewickelten Rohren, die mit einer gemeinsamen Seelenbewicklung umgeben sind. Vorzugsweise sind die Rohre um ein zug-und/oder stauchfestes Zentralelement lagenverseilt.

Der zugfeste Kabelmantel 12 besteht vorzugsweise aus einem beidseitig mit einem Copolymer beschichteten Aluminium-oder Stahlband, einem darüber befindlichen zugfesten Band aus aramid-und/oder glasfaserverstärktem Kunststoff oder einem Liquid-Crystal-Polymer und einer Kunststoffhülle, wobei das zugfeste Band mit dem Aluminium-oder Stahlband und der Kunststoffhülle verklebt ist.

Statt eines Metallbandes kann auch eine dreischichtige Kunststoffsperrfolie verwendet sein, deren mittlere Schicht aus Polyäthylenterephthalat und die anderen Schichten aus Polyäthylen bestehen.

## Ansprüche

1. Bandförmiges optisches Verkabelungselement, das zwei bandförmige Folien aufweist zwischen denen mehrere Lichtwellenleiter parallel zueinander angeordnet sind, **dadurch gekennzeichnet**, daß sich zwischen den bandförmigen Folien (2, 3) eine Wellfolie (4) befindet, und daß die Lichtwellenleiter (5) in den Hohlräumen zwischen der Wellfolie (4) und den bandförmigen Folien (2, 3) angeordnet sind.

2. Verkabelungselement nach Anspruch 1, dadurch gekennzeichnet, daß die Wellfolie (4) mit den bandförmigen Folien (2, 3) verklebt ist.

3. Verkabelungselement nach Anspruch 1 oder 2, dadurch gekennzeichnet, daß die Lichtwellenleiter (5) lose in den Hohlräumen angeordnet sind.

4. Verkabelungselement nach Anspruch 1 oder 2, dadurch gekennzeichnet, daß die bandförmigen Folien (2, 3) Schaumstofflaminatfolien sind, durch die die Lichtwellenleiter (5) leicht gegen die Wellfolie (4) gedrückt werden.

5. Verkabelungselement nach einem der vorhergehenden Ansprüche, dadurch gekennzeichnet, daß die verbleibenden Hohlräume mit einer Einbettungsmasse gefüllt sind.

6. Verkabelungselement nach einem der vorhergehenden Ansprüche, dadurch gekennzeichnet, daß in einem Teil der Hohlräume zugfeste Elemente angeordnet sind, die mit der Wellfolie (4) und/oder der bandförmigen Folie (2, 3) verklebt sind.

7. Bandförmiges optisches Verkabelungselement mit einer Wellfolie, deren Wellentäler beidseitig mit einer Einbettungsmasse ausgefüllt sind, in die Lichtwellenleiter eingebettet sind, und die an der Oberfläche des Verkabelungselements versiegelt oder vernetzt ist.

8. Verkabelungselement nach Anspruch 7, dadurch gekennzeichnet, daß in die Einbettungsmasse zusätzlich zugfeste Elemente eingebettet sind.

9. Optisches Kabelelement mit einem Verkabelungselement nach einem der vorhergehenden Ansprüche, dadurch gekennzeichnet, daß das Verkabelungselement eine Wendel bildet und zusammen mit einer im Gegenschlag gewickelten Folie ein in sich stabiles Rohr bildet.

10. Optisches Kabelelement mit zwei Verkabelungselementen, nach einem der Ansprüche 1 bis 8, dadurch gekennzeichnet, daß die Verkabelungselemente, mit unterschiedlicher Wendelrichtung übereinander gewickelt, ein in sich stabiles Rohr bilden.

11. Optisches Kabelelement nach Anspruch 9 oder 10, dadurch gekennzeichnet, daß innerhalb des Rohres ein mit einem Quellband umwickeltes Tragelement angeordnet ist und/oder daß das Rohr mit einer Füllmasse gefüllt ist.

12. Optisches Kabelelement nach Anspruch 9 oder 10, dadurch gekennzeichnet, daß innerhalb des Rohres eine Quellkordel angeordnet ist.

13. Optisches Kabel mit einer Seele mit mindestens einem optischen Element nach einem der vorhergehenden Ansprüche und mit einem zugfesten Kabelmantel.

14. Optisches Kabel nach Anspruch 13, dadurch gekennzeichnet, daß die Seele aus einem zug-und/oder stauchfesten Zentralelement, mehreren optischen Kabelelementen und einer Seelenbewicklung besteht.

15. Optisches Kabel nach Anspruch 13 oder 14, dadurch gekennzeichnet, daß der Kabelmantel ein Metallband, ein zugfestes Band aus glas-und/oder aramidfaserverstärktem Kunststoff oder einem Liquid-Crystal-Polymer und eine Kunststoffhülle aufweist, wobei das zugfeste Band mit dem Metallband und der Kunststoffhülle verklebt ist.

16. Optisches Kabel nach Anspruch 15, dadurch gekennzeichnet, daß der Kabelmantel statt dem Aluminiumband eine dreischichtige Kunststoffsperrfolie aufweist, deren mittlere Schicht aus Polyäthylenterephthalat und die anderen Schichten aus Polyäthylen bestehen.

0 282 960

## Fig.1

## Fig.2

## Fig.3

K.Kimmich 11-18
23. 7. 87